# EUROPEAN PATENT APPLICATION

(11) **EP 4 749 532 A1**
(43) Date of publication of application: **27.05.2026**
(21) Application number: 25202626.5
(22) Date of filing: 17.09.2025
(51) Int. Cl.: G06N 3/094, G06N 5/022, G06N 5/045, G06N 3/0464

(54) **A METHOD, APPARATUS, AND COMPUTER-READABLE MEDIUM FOR DETECTION AND ELIMINATION OF ADVERSARIAL ATTACKS**

(30) Priority: 26.11.2024 DE 102024211299
(71) Applicant: AUMOVIO Germany GmbH, 60488 Frankfurt am Main (DE)
(72) Inventor: Mikriukov, Georgii, 30175 Hannover (DE); Schwalbe, Gesina, 30175 Hannover (DE)
(74) Representative: Aumovio Corporation

(57) **Abstract**

Embodiments of the present disclosure relate to methods for detection and removal of adversarial attacks. A computer program, a computer-readable data carrier and an apparatus are also disclosed. The method for detection of adversarial attacks comprises: obtaining a sample embedding from a layer of a machine learning model; obtaining one or more predetermined adversarial perturbation embeddings corresponding to the layer of the machine learning model; obtaining an attribution score between the sample embedding and each of the predetermined adversarial perturbation embeddings; determining that at least one similarity scores of the obtained similarity scores exceed a predetermined threshold; classifying the predetermined adversarial perturbation embeddings, corresponding to the determined at least one similarity scores, as relevant perturbation embeddings; and providing an indication that an adversarial attack is detected.

## Description

The present disclosure relates to adversarial attacks. Specifically, the present disclosure relates to concept-based detection and elimination of adversarial attacks.

The concept of adversarial examples has been extensively studied and their existence in deep neural networks has been widely demonstrated. For instance, the fast gradient sign method (FGSM) has been used for generating adversarial examples and for exploring their properties. Another adversarial training method called Projected Gradient Descent (PGD) demonstrated effectiveness in improving model robustness against various adversarial attacks (AAs).

Other adversarial attack methods, including the Carlini & Wagner (C&W) attack, which are effective against defensive distillation and adversarial training, where also proposed, wherein a framework for evaluating the robustness of neural networks against adversarial examples has been disclosed an evaluated.

Some studies argue that adversarial examples should be viewed as a natural and inevitable consequence of the way machine learning models operate, rather than as bugs or flaws. These studies provide a theoretical framework for understanding adversarial examples and propose an adversarial training method to improve model robustness.

Other studies investigate how adversarial attacks impact the concepts learned by convolutional neural networks (CNNs) using explainable artificial intelligence (XAI) techniques across various models and attacks. Findings demonstrated that: attacks alter concept composition by introducing new concepts or modifying existing ones; only a subset of concepts is sufficient to enable the attack itself; the discovered adversarial concepts form clusters of similar directions across different attacks; and these discovered adversarial concepts are target-specific meaning they are similar for a given target class across different AA techniques and starting classes.

The so-called feature importance XAI methods focus on identifying which input features (e.g., pixels in an image, words in a text) are most influential in the model's decision-making process. Examples of these methods include: SHAP (SHapley Additive exPlanations) that uses game theory to assign each feature an importance value based on its contribution to the prediction, LIME (Local Interpretable Model-agnostic Explanations) that perturbs the input data and observes changes in the prediction to determine feature importance locally, and Integrated Gradients that computes the average gradient of the model's output with respect to the input features, providing a measure of feature importance. These methods enhance model interpretability by highlighting the features that drive predictions, making AI decisions more transparent and understandable.

Current adversarial attack detection techniques use feature importance XAI techniques to detect adversarial attacks. However, these methods focus on analyze the importance of high dimensional input features, they do not consider the lower dimensional internal representations in the latent space learned by the model.

Accordingly, current adversarial attack detection methods primarily rely on feature importance XAI techniques and do not effectively utilize the rich information contained in the model's internal representations for AA detection and elimination. Incorporating these internal representations has a considerable potential of improving the detection and elimination of adversarial attacks.

Furthermore, existing adversarial attack detection and elimination methods consider the neural network as a black box (non-transparent approach). New laws governing Al (e.g. EU Al Act) and emerging industrial Standards (e.g. ISO PAS 8800) demand transparency.

Hence, it is an object of the present invention to leverage the internal representations of machine learning models in order to provide enhanced detection and elimination of adversarial attacks. These internal representations reveal how adversarial perturbations affect the model's internal processing, leading to more effective detection and mitigation strategies.

According to a first aspect of the present invention, there is provided a method for detection of adversarial attacks, the method comprising: obtaining a sample embedding from a layer of a machine learning model; obtaining one or more adversarial perturbation embeddings corresponding to the layer of the machine learning model; obtaining a similarity score between the sample embedding and each of the one or more predetermined adversarial perturbation embeddings; determining that at least one similarity scores of the obtained similarity scores exceed a predetermined threshold; classifying the predetermined adversarial perturbation embeddings, corresponding to the determined at least one similarity score, as relevant perturbation embeddings; and providing, based on said determining, an indication that an adversarial attack is detected.

Accordingly, by obtaining (e.g. computing) a similarity score (e.g. attribution score, cosine similarity score) between the sample embedding (e.g. corresponding to a specific deep hidden layer of the machine learning model) and each of the predetermined adversarial perturbation embeddings (e.g. previously obtained from several simulated adversarial examples fed to the same machine learning model), and by determining that at least one similarity score of the obtained similarity scores exceed a predetermined threshold (e.g. meaning that at least one adversarial perturbation embedding considerably aligns with the sample embedding), a determination can be made that an adversarial attack is detected, and the adversarial perturbation embeddings, corresponding to the determined at least one similarity score, can be classified as relevant adversarial perturbation embeddings. This has the effect that said relevant embeddings can be now used to remove the attack, for instance, by projecting the sample embedding onto each one of the relevant embeddings, and then subtracting said projections from the sample embedding. **In** addition, the proposed method utilizes low-dimensional internal representations of the machine learning model, instead of using the inputs of said model (e.g. large images), thereby considerably reducing the processing overhead on the processor used for the detection of adversarial attacks.

**In** addition, the disclosed approach enables monitoring and analyzing how different features of input data are similar to known attack perturbations and/or patterns, and tailor targeted and efficient elimination techniques. The disclosed method also enables the machine learning model to distinguish between normal (safe) and abnormal (potentially malicious - when the similarity score is bigger than the predetermined threshold) states, based on indirectly monitoring the input data using the corresponding sample embeddings in a layer of the machine learning model.

For instance, for object detection and recognition applications in autonomous driving, features, in a specific part of an image, might resemble both a person and a traffic sign. This could the case, for instance, when (1) a person is partially hidden by a traffic sign, or (2) the image has been adversarially attacked, causing the features to be misleadingly similar. If case (1) is true, one should consider that there are multiple objects present, but the detection confidence for one or more of them is low. This can be verified by checking subsequent video frames to see if more objects appear and are detected. If case (2) is true, future frames will still show a single object that has features resembling different objects (corresponding to the relevant adversarial perturbation embeddings identified by the disclosed method).

Additionally, in some cases, AAs can suppress object features, preventing their detection. This means certain feature characteristics of the object may be missing in the feature space or sample embedding due to AA perturbations. By computing the similarity scores of the sample embedding with predetermined adversarial perturbation embeddings including those embeddings that are missing said feature characteristics of the object, these AA can now be detected and, for instance, marked as "potentially dangerous" for security purposes.

In embodiments, the similarity score may comprise or may be indicative of at least one of attribution score, similarity metric score, cosine similarity score, Euclidean distance, L1 distance, Jaccard similarity metric score, and Pearson correlation coefficient.

In embodiments, the predetermined threshold is obtained by performing empirical analysis on a validation dataset comprising perturbed embeddings and adversarial perturbation embeddings.

In embodiments, performing the empirical analysis comprises calculating similarity scores between the perturbed embeddings and the adversarial perturbation embeddings, and obtaining the predetermined threshold based on the similarity scores that maximize (or increase) a detection rate of perturbed embeddings while minimizing (or decreasing) false positives.

In embodiments, the predetermined adversarial perturbation embeddings, corresponding to the layer of the machine learning model, are obtained by subtracting perturbed embeddings corresponding to said layer from respective unperturbed embeddings corresponding to said layer. For example, a perturbed embedding may be obtained by passing intentionally perturbed input data through the machine learning model and capturing the output of the layer of the machine learning model.

According to another aspect of the present invention, there is provided a method for removal of an adversarial attack, the method comprising: obtaining, for a sample embedding from a layer of a machine learning model, relevant perturbation embeddings using the method according to the first aspect of the invention; projecting the sample embedding onto each of the relevant perturbation embeddings, thereby obtaining perturbation projections; and removing the perturbation projections from the sample embedding.

By projecting the sample embedding each of the relevant perturbation embeddings, one can use the perturbation projection to quantify how much each perturbation aligns with the sample embedding. This helps in understanding which perturbations are more effective in altering the model's perception. The projection can reveal which features of the sample embedding are most susceptible to adversarial attacks. This can help in identifying the model's vulnerabilities and the specific aspects of the input that are being exploited. Knowing which perturbations align most closely with the sample embedding allows for the development of targeted defense mechanisms. For instance, you can design regularization techniques or adversarial training strategies that specifically address these vulnerabilities. Projecting the sample embedding onto said perturbation embeddings can provide insights into how adversarial attacks manipulate the learned concepts within the model. This enhances the interpretability of the model's behavior under attack. Further, by comparing the projections, you can detect anomalies that indicate the presence of adversarial perturbations. This can be used to develop efficient adversarial detection systems.

In some embodiments, removing the perturbation projections from the sample embedding may comprise i) separately removing each perturbation projection from the sample embedding, or ii) removing a summation of at least two perturbation projections from the sample embedding.

By separately removing (e.g. subtracting) each adversarial perturbation projection from the sample embedding, an isolated impact analysis of the adversarial attack is enabled. In other words, by removing each perturbation projection separately, one can analyze the isolated impact of each perturbation on the sample embedding. This helps in understanding which specific perturbations have the most significant effect. This approach also allows for a detailed mapping of the model's vulnerabilities to specific types of perturbations. In addition, by removing each perturbation projection separately, the sample embedding may be adjusted incrementally, which can help in observing how each perturbation individually alters the internal representation. This provides fine-grained control over the modification process, making it easier to study the effects of small changes.

By removing a summation of at least two perturbation projections from the sample embedding, one can analyze the synergistic effects of multiple perturbations. This helps in understanding how different perturbations interact and amplify each other's impact. This approach provides a holistic view of the model's vulnerabilities to combined perturbations. In this case, the sample embedding undergoes larger adjustments, which can reveal how the model's internal representation is affected by more substantial perturbations. This helps in studying complex interactions between multiple perturbations and their collective impact on the model.

In embodiments, removing the perturbation projections form the sample embedding comprises subtracting the perturbation projections from the sample embedding.

According to another aspect of the present invention, there is provided a computer program comprising instructions which, when the computer program is executed by a computer, cause the computer to carry out any one of the methods discussed above.

According to a further aspect of the invention, there is provided a computer-readable data carrier having stored thereon the computer program mentioned above.

According to a further aspect of the invention, there is provided an apparatus comprising: one or more interfaces for communication; a memory; and a data processing circuit configured to carry out any one of the methods discussed above.

Examples will now be further described with reference to the figures in which:
Fig. 1 shows a flow diagram illustrating a computer-implemented method 100 for detection of an adversarial attack.
Fig. 2 shows a schematic illustrating the machine learning model, sample embedding, and adversarial perturbation embeddings used in method 100.
Fig. 3 shows a flow chart schematically illustrating an embodiment of a computer-implemented method 300 for removing an adversarial attack.
Figure 4 schematically illustrates a block diagram of an embodiment of an apparatus 400 to execute the methods described herein.

### Detailed Description

Adversarial attacks (AAs) in machine learning can be broadly categorized into several types. Evasion attacks involve subtly modifying input data to deceive a model during the testing phase, such as altering pixels in an image to mislead an image classifier. Poisoning attacks occur during the training phase, where attackers inject malicious data into the training set to corrupt the model. Model inversion attacks aim to extract sensitive information from the model, potentially revealing private data. Membership inference attacks determine whether a specific data point was part of the model's training set. Lastly, transferability attacks exploit the fact that adversarial examples designed for one model can often deceive other models as well. Each of these attacks poses unique challenges and requires robust defenses to ensure the security and integrity of machine learning systems.

Adversarial attacks impact the concepts learned by machine learning models using explainable artificial intelligence techniques. For instance, adversarial attacks significantly change the concept composition within the feature space of convolutional neural networks (CNNs), introducing new concepts or modifying existing ones.

The adversarial perturbation can be broken down into linear components, comprising critical components (also called concepts) that are target-specific and are similar for a given target class across different attack techniques and starting classes.

Adversarial attacks and embeddings thereof comprise concept vectors of target-specific direction. In particular, AAs can be characterized by directions in feature space that are mostly agnostic to attack technique and attack origin class. This knowledge can be further leveraged in the explainable design of adversarial attacks and defenses against them.

In particular, adversarial attacks can be characterized by specific directions in the feature space of a neural network that are largely independent of the attack technique used or the original class of the input. These agnostic directions mean that certain perturbations affect the model's internal representations in a similar way, regardless of how the attack was generated or what the original class was.

This insight has significant implications. Firstly, it provides a unified understanding of how adversarial perturbations manipulate the model, simplifying the analysis of different attack methods. Secondly, by knowing these agnostic directions, the design adversarial attacks in a more explainable and predictable manner becomes possible, making it easier to test model robustness.

Moreover, this knowledge can be leveraged to develop targeted defenses. By understanding these common perturbation directions, defenses can be designed to specifically counteract them, enhancing the model's robustness against a wide range of adversarial attacks. Regularizing the feature space to be less sensitive to these directions can also reduce the model's vulnerability.

Recognizing that adversarial perturbations can be characterized by agnostic directions in the feature space provides valuable insights for both attacking and defending neural networks in a more explainable and systematic way.

Accordingly, it is an object of the present disclosure to provide improved solutions that leverage internal representations of a machine learning model to enable real-time and efficient detection, classification, and removal of AAs, thereby considerably enhancing the model's robustness against a wide range of adversarial attacks.

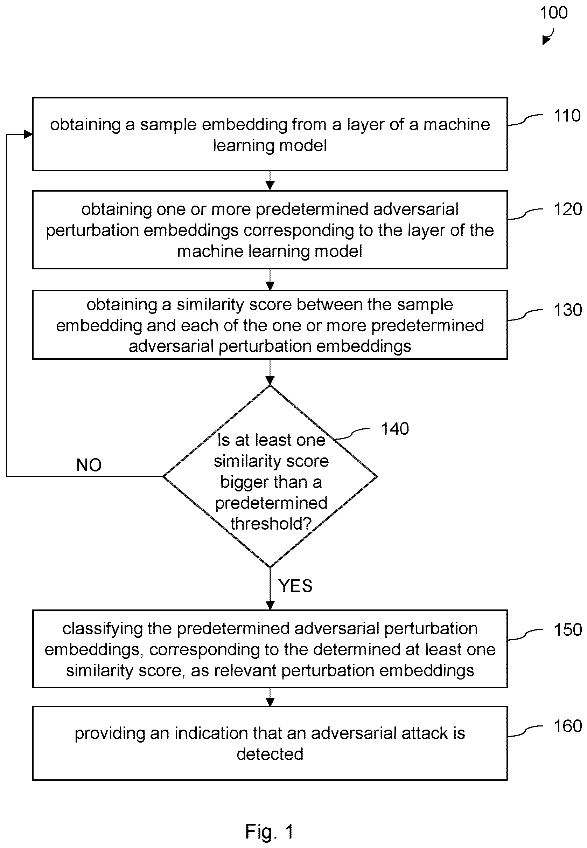

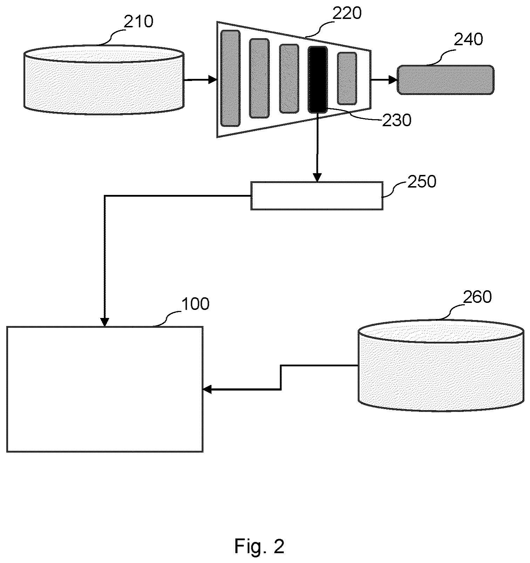

Fig. 1 shows a flow diagram illustrating a computer-implemented method 100 for detecting an adversarial attack. Fig. 2 shows a schematic illustrating the machine learning model 220, sample embedding 250, and adversarial perturbation embeddings 260 used in method 100.

Step 110 of method 100 comprises obtaining a sample embedding 250 from a layer of a machine learning model 220.

In embodiments, the sample embedding 250 may be the output of the layer of the machine learning model 220. The sample embedding 250 may be the latent space representation of said layer. The layer may be an input layer or a hidden layer. The layer may be an intermediate (e.g. hidden) layer or the innermost (e.g. hidden) layer. The layer may represent the input data 210 in a transformed feature space.

For example, in a convolutional neural network 220 used for image classification, a sample embedding 250 might be taken from any fully connected layer or from a fully connected layer just before the output layer. The sample embedding 250 may capture high-level features of the image, such as shapes and textures, which may be crucial for classification tasks.

For instance, in a recurrent neural network (RNN) 220, particularly in natural language processing tasks like voice recognition, a sample embedding 250 can be obtained from the hidden state of an LSTM (Long Short-Term Memory) cell. This embedding may encapsulate the sequential information and context of the input text, making it useful for understanding the sentiment or meaning of the text.

For instance, in a transformer model like BERT (Bidirectional Encoder Representations from Transformers) 220, embeddings may be extracted from any intermediate or final hidden layers. These embeddings represent the contextualized meaning of words in a sentence, capturing nuances and relationships between words, which are essential for tasks like question answering and language translation.

Step 120 comprises obtaining one or more predetermined adversarial perturbation embeddings 260 corresponding to the layer of the machine learning model 220.

In embodiments, predetermined adversarial perturbation embeddings 260 may be the difference between perturbed (or adversarial) embeddings and unperturbed (or original or clean) embeddings. For example, a perturbed embedding can be generated by adding small, carefully calculated noise to an input 210 of the machine learning model 220. Perturbed embeddings, may be denoted as f(x + delta), and may be the representations of input data x that have been intentionally perturbed by a small amount delta, for instance, to deceive a machine learning model 220. These perturbations may be crafted to be subtle enough that they do not significantly alter the input from a human perspective but are sufficient to cause the model to make incorrect predictions.

For example, in image classification, a perturbed (or adversarial) embedding can be generated by adding small, carefully calculated noise to an image, for instance using methods like the Fast Gradient Sign Method (FGSM). This method adjusts the pixel values in the direction that maximizes the model's prediction error, resulting in an image that looks almost identical to the original but is misclassified by the model.

In some embodiments, the predetermined adversarial perturbation embeddings 260 corresponding to a layer of the machine learning model 220 may be obtained by subtracting perturbed (e.g. adversarial, error induced) embeddings from respective unperturbed embeddings corresponding to said layer. An unperturbed embedding may be a transformed representation of input data 210 that has not been intentionally perturbed. A perturbed embedding may be a transformed representation of input data 210 that has been intentionally perturbed in such a way that the machine learning model 220 produces incorrect and/or unintended outputs 240. The unperturbed embedding may be obtained by passing the unperturbed (or original or clean) input data 210 (e.g. image, sound) through the machine learning model 220 and capturing the output from the layer of the machine learning model 220. The perturbed embedding may be obtained by passing the intentionally perturbed input data 210 (e.g. adversarially attacked, or error induced, image, sound) through the machine learning model 220 and capturing the output of the layer of the machine learning model 220. The perturbed embedding, unperturbed embeddings and/or adversarial perturbation embeddings 260, for each layer (or corresponding to each layer) of the machine learning model, may be stored in a database, along with respective metadata (e.g. target class, attack scope, type of perturbation, and attack method), for later use.

For example, generating the predetermined adversarial perturbation embeddings 260 may involve several steps, starting from crafting the attack to calculating the difference between the unperturbed (original or clean) and perturbed (adversarial) embeddings. For example, generating the predetermined adversarial perturbation embeddings 260 may involve at least one of the following steps: 1) Selecting the attack method: for example, the first step is to choose an attack method, such as the Fast Gradient Sign Method (FGSM), Projected Gradient Descent (PGD), or the Carlini-Wagner attack. Each method has its own approach to generating perturbations. 2) Crafting the perturbation: for example, using the selected attack method, a perturbation delta is crafted. For instance, in FGSM, the perturbation is calculated by taking the gradient of the loss function with respect to the input data and adjusting the input in the direction that increases the loss. This results in a perturbed input x + delta. 3) Generating perturbed embeddings: for example, the perturbed input x + delta is then passed through the machine learning model 220 to obtain a perturbed embedding f(x + delta) in every layer of the model. This perturbed embedding may be the output of the layer and may represent the model's internal representation of the perturbed input. 4) Obtaining unperturbed embeddings: for example, the original input x is also passed through the model to obtain the clean embedding f(x) in every layer of the model. This embedding may represent the model's internal representation of the unperturbed input. 5) Calculating the adversarial perturbation embedding: for example, the adversarial perturbation embedding is calculated, for every layer of the model, by taking the difference between the perturbed embedding and the unperturbed embedding, i.e., f(x + delta) - f(x). For example, this difference highlights how the perturbation delta has altered the model's internal representation of the input.

The calculated or predetermined adversarial perturbation embeddings 260, for each layer of the machine learning model, along with their corresponding metadata, may be stored in a database. The metadata may include data such as the target class (the intended misclassification), the scope of the attack (e.g., specific images or a range of inputs), the type of perturbation (e.g., pixel changes, word substitutions), and/or the attack method used. This structured storage or database allows for efficient retrieval and analysis of the perturbation embeddings.

Step 130 comprises obtaining a similarity score between the sample embedding 250 and each of the one or more predetermined adversarial perturbation embeddings 260.

In embodiments, the similarity score between the sample embedding 250 and each of the adversarial perturbation embeddings 260, may comprise or may be indicative of at least one of attribution score, similarity metric score, cosine similarity score, arccosine of the cosine similarity score, Euclidean distance, L1 distance, Jaccard similarity metric score, and Pearson correlation coefficient.

The cosine similarity metric measures the cosine of the angle between two vectors, indicating how similar they are in terms of direction. It is particularly useful for high-dimensional data like embeddings. The Euclidean distance metric calculates the straight-line distance between two points in the embedding space. It provides a measure of how far apart the embeddings are. The L1 distance metric sums the absolute differences between the coordinates of the embeddings. It is useful for understanding the total variation between embeddings. The Jaccard similarity metric measures the similarity between finite sample sets, often used for binary or categorical data. It can be adapted for embeddings by considering the overlap of features. The Pearson correlation coefficient assesses the linear correlation between two sets of embeddings, indicating how well one embedding can be predicted from the other.

For example, the attribution score may be computed using at least one of integrated Gradients, SHAP (SHapley Additive exPlanations), LIME (Local Interpretable Model-agnostic Explanations), Grad-CAM (Gradient-weighted Class Activation Mapping), DeepLIFT (Deep Learning Important FeaTures), and Saliency Maps.

Step 140 comprises determining that at least one similarity score of the obtained similarity scores exceed a predetermined threshold. Step 150 comprises classifying the predetermined adversarial perturbation embeddings 260, corresponding to the determined at least one similarity score, as relevant perturbation embeddings, and step 160 comprises providing, based on said determining, an indication that an adversarial attack is detected.

Determining that at least one similarity score (e.g. similarity metric score, cosine similarity score, attribution score) of the obtained (e.g. computed) similarity scores is greater than a predetermined threshold, identifying the relevant perturbation embeddings, and subsequently providing an indication that an adversarial attack is detected provides for the following technical effects:
1) Enhanced security: By setting a threshold for similarity scores, the system can effectively identify when an input has been perturbed in an adversarial manner. This helps in promptly detecting and mitigating potential attacks, thereby enhancing the overall security of the machine learning model 220. 2) Improved model robustness: Regularly monitoring and responding to adversarial attacks ensures that the model remains robust against such threats. This proactive approach helps in maintaining the integrity and reliability of the model's predictions. 3) Real-time detection: automating the detection process based on similarity scores (e.g. similarity metric scores, e.g. cosine similarity scores) between low-dimensional embeddings (compared to large input data or images 210) allows for real-time identification of adversarial inputs. This considerably reduces the processing overhead on the processor. 4) Reduced false positives: By fine-tuning the threshold, only relevant perturbation embeddings that align most with the sample embedding 250 can be identified, thereby minimizing false positives, and ensuring that only genuine adversarial attacks are flagged. This improves the accuracy of the detection mechanism and reduces unnecessary alerts. Overall, this approach leverages similarity scores to create a robust defense mechanism against adversarial attacks, ensuring the security and reliability of machine learning models 220.

In some embodiments, the predetermined threshold (related to step 140) may be obtained by performing empirical analysis on a validation dataset. The validation dataset may comprise perturbed embeddings and adversarial perturbation embeddings 260, for a layer, or for each layer, of a machine learning model. For instance, performing the empirical analysis may comprise calculating similarity scores (e.g. similarity metric scores, cosine similarity scores - see more similarity score examples above) between the perturbed (e.g. adversarial, error induced) embeddings and the adversarial perturbation embeddings 260 of the validation dataset, and may further comprise obtaining the predetermined threshold based on said similarity scores. For instance, obtaining the predetermined threshold based on said similarity scores may comprise obtaining the threshold that optimally separates the perturbed embeddings from the adversarial perturbation embeddings 260, and, for instance, taking said threshold as the predetermined threshold. For instance, the predetermined threshold may be the similarity score that maximizes the detection rate of perturbed embeddings while minimizing false positives.

In some embodiments, performing the empirical analysis on the validation dataset may comprise at least one of the steps: 1) Use a validation dataset that includes both clean (unaltered) samples and adversarially perturbed samples generated using various attack methods. 2) For each sample in the validation dataset, compute the unperturbed (e.g. original, clean) embeddings and the adversarial perturbation embeddings 260. 3) Compute the similarity scores (e.g., similarity metric scores, cosine similarity scores, see more examples above) between the original embeddings and the adversarial perturbation embeddings 260 for each sample. 3) Analyze the distribution of the similarity scores for both clean and adversarial samples. This may involve at least one of clustering, plotting histograms and using statistical methods to understand how the metrics differ between the two types of samples. 4) Determine a threshold that best separates the clean samples from the adversarial samples. This can be done by selecting a value that maximizes the detection rate of adversarial samples while minimizing false positives. Techniques such as Receiver Operating Characteristic (ROC) curves can help in choosing an optimal threshold. 5) Validate the chosen threshold on a separate validation dataset, for instance, to ensure it generalizes well and effectively distinguishes between clean and adversarial samples.

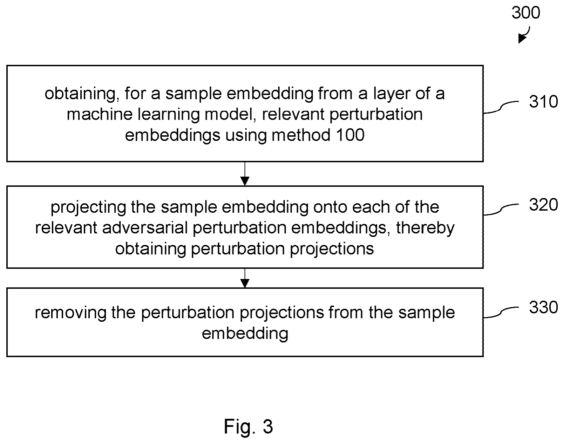

Fig. 3 shows a flow chart schematically illustrating an embodiment of a computer-implemented method 300 for removing an adversarial attack.

Step 310 of method 300 comprises obtaining, for a sample embedding 250 from a layer of a machine learning model 220, relevant perturbation embeddings using the method for detection of adversarial attacks discussed above.

Step 320 comprises projecting the sample embedding 250 onto each of the relevant adversarial perturbation embeddings 260, thereby obtaining perturbation projections.

For example, projecting the sample embedding 250 onto each of the relevant adversarial perturbation embeddings 260 may be done using vector projection. For example, projecting the sample embedding 250 onto each of the relevant adversarial perturbation embeddings 260 may comprise computing the dot product between the sample embedding 250 and the adversarial perturbation embedding. This projection may measure the extent to which the two vectors align.

For example, projecting the sample embedding 250 onto each of the relevant adversarial perturbation embeddings 260 may comprise calculating the magnitude (or norm) of the adversarial perturbation embedding. This first step may ensure that the projection is scaled correctly. For instance, projecting the sample embedding 250 onto each of the relevant adversarial perturbation embeddings 260 may further comprise multiplying the normalized adversarial perturbation embedding by the dot product calculated in the first step. This, for instance, gives the component of the sample embedding 250 that lies in the direction of the adversarial perturbation embedding. This projection may help in understanding how much of the sample embedding 250 aligns with the adversarial perturbation, for instance, providing insights into the influence of the perturbation on the model's internal representation.

Step 330 comprises removing the perturbation projections from the sample embedding 250.

This process 300 helps in isolating the original features of the sample embedding 250 by removing the distortions introduced by the adversarial perturbation, thereby providing a clearer representation of the unperturbed input.

In embodiments, removing the perturbation projections form the sample embedding 250 may comprise subtracting the perturbation projections from the sample embedding 250.

In embodiments, removing the perturbation projections from the sample embedding 250 may comprise i) separately removing each perturbation projection from the sample embedding 250, or ii) removing a summation of at least two perturbation projections from the sample embedding 250.

For instance, separately removing each perturbation projection may comprise subtracting each individual perturbation projection from the sample embedding 250 one at a time. Accordingly, for each adversarial perturbation embedding, one may compute its projection onto the sample embedding 250 and then subtract this projection. This approach allows for a detailed analysis of the impact of each perturbation separately.

In embodiments, removing the perturbation projections from the sample embedding 250 may, additionally or alternatively, comprise removing the maximum perturbation projection of the obtained perturbation projections. For instance, the maximum perturbation projection may be the maximum value obtained from the dot products between the sample embedding and each of the relevant adversarial perturbation embeddings 260. For instance, removing the maximum perturbation projection may be subtracting said maximum from the sample embedding.

For instance, removing a summation of at least two perturbation projections may comprise summing the projections of at least two adversarial perturbation embeddings 260 to obtain a combined projection, and then subtracting this combined projection from the sample embedding 250. This method provides a holistic adjustment by considering the cumulative effect of multiple perturbations at once, which can be useful when dealing with complex adversarial attacks involving multiple perturbations.

According to another aspect of the invention, there is provided a framework for transparent detection and elimination of adversarial attacks. The framework comprising an adversarial attack component running any one of the methods discussed above (Fig. 1-3). This component identifies incoming threat (e.g., can be visual perturbation for the camera or network attack). The framework may further comprise sensors and electronics components. These are modules (e.g. cameras, Lidar) of the vehicle susceptible to attacks that may interact with external world. The framework may further comprise vehicle AI components. These are Al systems of the Vehicle (e.g. computer vision models for the cruise control, network analysis modules for telemetry, etc.). The framework may further comprise a monitoring module, which transparently detect attacks in the feature space (e.g. see Fig. 1-3 and related description) of neural networks, detects source and target of attack, and logs telemetry (aka "flight recorder"). The framework may further comprise an attack response module, which either
i) transparently eliminates attacks in the feature space (e.g. see Fig. 1-3 and related description) of Neural Networks, ii) switches the controls over vehicle to non-attacked backup controls (e.g., non-Al control theory modules) in case of attack, iii) informs pilot, and iv) transfers data to external authorities, warning about the threat in case of attack, and hence prevents accidents and dangerous situations from happening. The framework may further comprise a vehicle control module comprising an Al-machine interface, directly operating the controls of vehicle.

The framework for transparent detection and elimination of adversarial attacks, discussed above, may be used to provide online monitoring and protection from adversarial attacks as follows: the monitoring module, discussed above, may compare (e.g. in a comparison module) the neural network representation or embedding with pre-defined adversarial attack embeddings or vectors (e.g. see Fig. 1-3 and related description) in to obtain the current status. The status is always reported to log module. Normal status informs about regular operating conditions, without attack. Attacked status (e.g. additionally contains directions: source and target and other details) means that the attack is ongoing. In event of attack (e.g. Status: Attacked), the attack information and details are transferred to response module.

Firstly, the event of attack is signalized in the report module, which must display / signalize the attack to the pilot or operator and transmit / inform authorities in control center. Secondly, an attack elimination process, attempts to erase attack components from the neural network internal representations (e.g. see Fig. 1-3 and related description), where the outcome can be either success or fail. The outcome is always saved to log, and a report is transmitted for authorities and pilot. In case of fail of attack suppression, the response module may take decision to switch control over vehicle to, for instance, non-AI vehicle control. Such algorithm runs in a loop and creates online monitoring and protection from adversarial attacks using pre-defined attack vectors or adversarial perturbation embeddings. Thus, both transparency and efficient detection and elimination of adversarial attacks are thereby achieved.

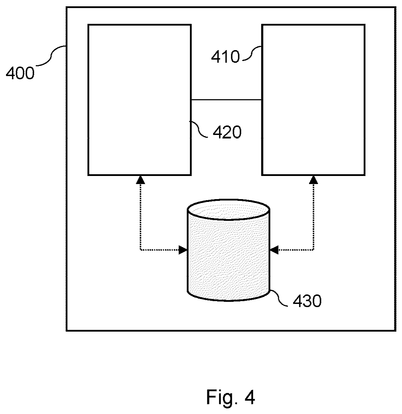

Fig. 4 schematically illustrates a block diagram of an embodiment of an apparatus 400 comprising one or more interfaces 410 for communication and one or more processors or data processing circuits 420 configured to execute any one of the methods described herein.

In embodiments, the apparatus may further comprise a memory or a storage medium 430. A storage medium 430 (or a data carrier, or a computer-readable data carrier, or a computer-readable medium) may comprise, stored thereon, a computer program or computer-executable instructions for performing one of the methods described herein when it is performed by one or more processors 420. The processors 420 may communicate with the storage medium 430 directly and/or via the one or more interfaces 410.

In embodiments, the one or more interfaces 410 may comprise wired and/or wireless interfaces for transmitting and/or receiving communication signals in connection with the execution of the proposed concept. In practice, the interfaces, e.g., comprise pins, wires, antennas, and/or the like. As well, the interfaces may comprise means for (analog and/or digital) signal or data processing in connection with the communication, e.g., filters, samples, analog-to-digital converters, signal acquisition and/or reconstruction means as well as signal amplifiers, compressors and/or any encryption/decryption means.

The data processing circuit 420 may correspond to or comprise any type of programable hardware. So, examples of the data processing circuit 420, e.g., comprise a memory, microcontroller, field programmable gate arrays, one or more central and/or graphical processing units. To execute the proposed method, the data processing circuit 420 may be configured to access or retrieve an appropriate computer program for the execution of the proposed method from a memory of the data processing circuit 420 or a separate memory which is communicatively coupled to the data processing circuit 420.

Some or all of the method steps described above with regard to Figures 1-3 may be implemented by a computer in that they are executed by (or using) a processor, a microprocessor, an electronic circuit, or the data processing circuit 420. For example, the implementation can be performed using a non-transitory storage medium such as a computer-readable storage medium or data carrier. Such computer-readable media include any media that can be accessed by either a general-purpose or a specialized computer system.

Generally, the methods described herein can be implemented as a computer program product with a program code or computer-executable instructions, the program code or computer-executable instructions being operative for performing one of the methods when the computer program products run on a computer. The program code or the computer-executable instructions may, for example, be stored on the computer-readable storage medium 430.

## Claims

1. A method for detection of an adversarial attack, the method comprising:
obtaining (110) a sample embedding from a layer of a machine learning model;
obtaining (120) one or more predetermined adversarial perturbation embeddings corresponding to the layer of the machine learning model;
obtaining (130) a similarity score between the sample embedding and each of the one or more predetermined adversarial perturbation embeddings;
determining (140) that at least one of the obtained similarity scores exceeds a predetermined threshold;
classifying (150) the predetermined adversarial perturbation embeddings, corresponding to the determined at least one similarity scores, as relevant perturbation embeddings; and
providing (160), based on said determining, an indication that an adversarial attack is detected.

2. The method of claim 1, wherein the similarity score may be indicative of at least one of attribution score, similarity metric score, cosine similarity score, Euclidean distance, L1 distance, Jaccard similarity metric score, and Pearson correlation coefficient.

3. The method of claim 1 or 2, wherein the predetermined threshold is obtained by performing empirical analysis on a validation dataset comprising perturbed embeddings and adversarial perturbation embeddings.

4. The method of claim 3, wherein performing the empirical analysis comprises calculating similarity scores between the perturbed embeddings and the adversarial perturbation embeddings, and obtaining the predetermined threshold based on the similarity scores that increases a detection rate of perturbed embeddings while decreasing false positives.

5. The method of any pervious claim, wherein the predetermined adversarial perturbation embeddings corresponding to the layer of the machine learning model are obtained by subtracting perturbed embeddings corresponding to said layer from respective unperturbed embeddings corresponding to said layer.

6. The method of claim 5, wherein a perturbed embedding is obtained by passing intentionally perturbed input data through the machine learning model and capturing the output of the layer of the machine learning model.

7. A method (300) for removal of an adversarial attack, the method comprising:
obtaining (310), for a sample embedding from a layer of a machine learning model, relevant perturbation embeddings, using the method of any one of the previous claims;
projecting (320) the sample embedding onto each of the relevant adversarial perturbation embeddings, thereby obtaining perturbation projections; and
removing (330) the perturbation projections from the sample embedding.

8. The method of claim 7, wherein removing the perturbation projections from the sample embedding comprises i) separately removing each perturbation projection from the sample embedding, or ii) removing a summation of at least two perturbation projections from the sample embedding.

9. The method of claim 7 or 8, wherein removing the perturbation projections form the sample embedding comprises subtracting the perturbation projections from the sample embedding.

10. A computer program comprising instructions which, when the computer program is executed by a computer, cause the computer to carry out a method of any one of the preceding claims.

11. A computer-readable data carrier having stored thereon the computer program of claim 10.

12. An apparatus comprising:
one or more interfaces for communication;
a memory; and
a data processing circuit configured to carry out the method of any one of claims 1 to 9.
